# EUROPÄISCHE PATENTSCHRIFT

(11) **EP 1 912 770 B1**
(45) Veröffentlichungstag und Bekanntmachung des Hinweises auf die Patenterteilung: **02.12.2009**
(21) Anmeldenummer: 06777927.2
(22) Anmeldetag: 24.07.2006
(51) Int. Cl.: B29C 33/30, B29B 11/16, B29C 70/38, B29L 31/30

(54) **VORRICHTUNG ZUR HERSTELLUNG EINES FASERVORFORMLINGS MIT EINER NAHEZU BELIEBIGEN OBERFLÄCHENGEOMETRIE IM TFP-VERFAHREN**
DEVICE FOR PRODUCING IN A TFP METHOD A FIBRE PREFORM PROVIDED WITH AN ALMOST ANY SURFACE GEOMETRY
PROCEDE POUR PRODUIRE UNE EBAUCHE FIBREUSE PRESENTANT UNE GEOMETRIE DE SURFACE QUELCONQUE AU COURS D'UN PROCEDE TFP

(30) Priorität: 22.07.2005 DE 102005034400
(43) Veröffentlichungstag der Anmeldung: 23.04.2008
(73) Patentinhaber: Airbus Deutschland GmbH, 21129 Hamburg (DE)
(72) Erfinder: JÖRN, Paul, 22763 Hamburg (DE); EBERTH, Ulrich, 86641 Rain (DE)
(74) Vertreter: Peckmann, Ralf
(86) Internationale Anmeldenummer: PCT/EP2006/064571
(87) Internationale Veröffentlichungsnummer: WO 2007/010050

(56) Entgegenhaltungen:
- GB-A- 2 268 699
- ANONYMOUS: "Erläuterung zur TFP-Technologie" [Online] 7. März 2005 (2005-03-07), ANONYMOUS , XP002400709 Gefunden im Internet: URL:http://www.hightex-dresden.de/tfptech. pdf> [gefunden am 2006-09-27] Abbildung 3 Absatz [01.2] & 28. September 2006 (2006-09-28), Gefunden im Internet: URL:http://web.archive.org/web/*/http://ww w.hightex-dresden.de>

## Beschreibung

Die Erfindung betrifft eine Vorrichtung zur Herstellung eines Faservorformlings mit einer nahezu beliebigen Oberflächengeometrie im TFP-Verfahren, wobei ein Faserstrang mit einem Führungsmittel in einer nahezu beliebigen Bahnkurve auf einer Tragschicht ablegbar ist und der Faserstrang mit mindestens einem Fixierfaden mittels eines Nähkopfes auf der Tragschicht anheftbar ist.

Im Leichtbau, insbesondere im Flugzeugbau als auch in der Raumfahrt, werden für tragende Konstruktionskomponenten zunehmend faserverstärkte Verbundbauteile eingesetzt, die aufgrund ihrer hohen Festigkeit bei einer gleichzeitig geringen Masse ein hohes Gewichtseinsparungspotential aufweisen.

Die Ausrichtung der Verstärkungsfasern im fertigen Verbundbauteil hat dabei einen entscheidenden Einfluss auf die erreichbare Steifigkeit und Festigkeit. Die Verstärkungsfasern sollten möglichst der Belastungsrichtung folgen, keine Welligkeiten aufweisen und gleichmäßig beansprucht sein.

Eine Möglichkeit dieser Forderung nach einer belastungsgerechten Faserlage nachzukommen ist das so genannte TFP-Verfahren ("Tailored Fiber Placement"). Hierbei wird mindestens ein Faserstrang entlang einer beliebigen Bahnkurve abgelegt und mit Hilfe mindestens eines Heftfadens auf einer Tragschicht fixiert, wodurch die Lage und Orientierung der einzelnen Verstärkungsfasern in einem so gebildeten Faservorformling in nahezu idealer Weise dem im späteren Verbundbauteil vorherrschenden Kraftfluss angepasst werden kann.

Die Fertigung der Faservorformlinge im TFP-Verfahren erfolgt auf bekannten Vorrichtungen, insbesondere auf modernen, rechnergesteuerten Näh- bzw. Stickautomaten. Derartige Vorrichtungen zur Durchführung des TFP-Verfahrens weisen im Allgemeinen einen feststehenden Nähkopf auf. Lediglich die Tragschicht, auf der der Faservorformling durch Ablegen und Anheften der Faserstränge gebildet wird, ist in der xy-Richtung des Raums positionierbar. ("Erlauterung zur TFP-Technologie", www.hightex-dresden.de/downloads/Hightex.pdf)

Der so gebildete Faservorformling kann beispielsweise mittels des RTM-Verfahrens ("Resin Transfer Moulding") zu einem fertigen Verbundbauteil mit einem aushärtbaren Kunststoffmaterial bzw. einem durch Vernetzung aushärtbaren Harzsystem imprägniert und ausgehärtet werden.

Nachteilig bei den bekannten Vorrichtungen zur Durchführung des TFP-Verfahrens ist, dass der Faserstrang nur in einer Ebene, beispielsweise der xy-Ebene geführt und abgelegt wird. Dadurch weist der erzeugte Faservorformling in der Regel eine ebene Oberflächengeometrie auf. Nur durch weitere, nach geschaltete Verarbeitungsschritte, beispielsweise durch Umformen, Drapieren oder dergleichen, kann dem Faservorformling eine von der ebenen Gestalt abweichende Oberflächengeometrie verliehen werden. Durch die Weiterverarbeitung des anfänglich ebenen Faservorformlings können sich jedoch beispielsweise unerwünschte Welligkeiten sowie Verschiebungen der Verstärkungsfasern ergeben, so dass die angestrebten, insbesondere kraftflussorientierten Ausrichtungen der Verstärkungsfasern im Faservorformling nicht oder nur teilweise erreicht werden.

Aufgabe der Erfindung ist es eine Vorrichtung zur Herstellung von Faservorformlingen zu schaffen, die eine Erzeugung von Faservorformlingen mit einer, von der ebenen Gestalt abweichenden, nahezu beliebigen Oberflächengeometrie erlaubt. Die erfindungsgemäße Vorrichtung soll darüber hinaus nur geringfügige Modifikationen an bekannten Vorrichtungen zur Durchführung des TFP-Verfahrens erforderlich machen.

Diese Aufgabe wird durch eine Vorrichtung gemäß dem Kennzeichen des Patentanspruchs 1 gelöst.

Dadurch, dass die Tragschicht in einer xy-Richtung des Raums in Relation zum Führungsmittel und zum Nähkopf positionierbar ist, wobei der Nähkopf und/oder das Führungsmittel in einer z-Richtung des Raums positionierbar sind,
lässt sich mittels der erfindungsgemäßen Vorrichtung ein Faservorformling im TFP-Verfahren herstellen, der eine nahezu beliebige Oberflächengeometrie, insbesondere auch eine von der ebenen Gestalt abweichende Oberflächengeometrie aufweist, und bei dem zudem die Verstärkungsfasern im Wesentlichen kraftflussorientiert ausgerichtet sind. Die erfindungsgemäße Vorrichtung erfordert dabei lediglich eine zusätzliche Beweglichkeit des Nähkopfes in der z-Richtung des Raums, so dass die vorbekannten Vorrichtungen zur Durchführung des TFP-Verfahrens relativ leicht umgerüstet bzw. modifiziert werden können.

Mittels der erfindungsgemäßen Vorrichtung lässt sich beispielsweise ein Faservorformling mit einer im Wesentlichen kalottenförmigen Oberflächengeometrie und einer gleichzeitig nahezu idealen, insbesondere kraftflussorientierten Ausrichtung der Verstärkungsfasern fertigen, der nach einer Imprägnierung mit einem aushärtbaren Kunststoffmaterial und der anschließenden Aushärtung des Kunststoffmaterials unter anderem als Druckschott für Rumpfzellen von Luftfahrzeugen einsetzbar ist.

Nach Maßgabe einer weiteren vorteilhaften Ausgestaltung ist vorgesehen, dass eine Oberflächengeometrie der Tragschicht zur Herstellung eines Faservorformlings mit einer nahezu beliebigen Oberflächengeometrie durch Druckstempel variierbar ist.
Hierdurch lassen sich eine Vielzahl von Ausführungsvarianten von Faservorformlingen mit unterschiedlichen Oberflächengeometrien auf einer universellen Unterlage ablegen. Die Änderung der Oberflächengeometrie der Tragschicht erfolgt durch eine Vielzahl von unterhalb der Tragschicht angeordneten Druckstempeln, die durch Aktuatoren verfahrbar ausgebildet sind. Die Tragschicht bewegt sich hierbei in Relation zu den stillstehenden Druckstempeln über diese hinweg.

Eine weitere vorteilhafte Ausgestaltung sieht vor, dass die Tragschicht in einem Spannrahmen aufgenommen ist.

Hierdurch lässt sich die Bewegung der Tragschicht in xy-Richtung auf einfache Art und Weise durch eine entsprechende Bewegung des Spannrahmens mittels Aktuatoren, kontrolliert von einer Steuer- und Regeleinrichtung, erreichen. Gegebenenfalls, insbesondere bei einer nicht ausreichenden Elastizität der Tragschicht, kann es erforderlich sein, die Geometrie des Spannrahmens mittels Aktuatoren zu variieren, um die Variation der Oberflächengeometrie der Tragschicht durch die Druckstempel zu unterstützen.

Eine weitere vorteilhafte Ausgestaltung der erfindungsgemäßen Vorrichtung sieht vor, dass die Tragschicht mit einem Flächengewirk, insbesondere mit einem Gewebe oder dergleichen, zur Anheftung des Faserstrangs im konventionellen Heftverfahren mit einem Fixieroberfaden und einem Fixierunterfaden gebildet ist.
Hierdurch können die konventionellen Vorrichtungen zur Durchführung des TFP-Verfahrens mit einem Fixieroberfaden und einem Fixierunterfaden nach einer entsprechenden konstruktiven Modifikation, insbesondere in Form der zusätzlichen Positionierbarkeit des Nähkopfes und der Unterfadenführung in der z-Richtung, weiter verwendet werden.

Nach Maßgabe einer weiteren vorteilhaften Ausgestaltung ist die Tragschicht mit einem elastischen und flexiblen Flächengebilde, insbesondere mit einer Gummiplatte, zum Anheften der Faserstränge im "Tufting"-Verfahren, gebildet.
Die Verwendung einer Gummiplatte bzw. einer Gummimatte erlaubt eine Anheftung der Faserstränge im so genannten "Tufting"- Verfahren allein mittels des Fixieroberfadens, so dass sowohl die Unterfadenführung als auch der Fixierunterfaden ersatzlos entfallen können. Hierdurch ergibt sich ein konstruktiv erheblich einfacherer Aufbau der erfindungsgemäßen Vorrichtung. Der Fixieroberfaden wird hierbei zumindest oberflächlich in die Gummiplatte eingebracht und verklemmt sich aufgrund der hohen Elastizität in dieser, so dass sich beim Herausziehen der Nadel eine im Bereich der Oberfläche der Gummiplatte festgesetzte Schlaufe bildet, die eine ausreichend sichere Anheftung des Faserstrangs, auch ohne eine Tragschicht im Sinne des konventionellen Anheftverfahrens mit Ober- und Unterfixierfaden, gewährleistet.

Weitere vorteilhafte Ausgestaltungen der Vorrichtung sind in den weiteren Patentansprüchen dargelegt.

### In der Zeichnung zeigt:

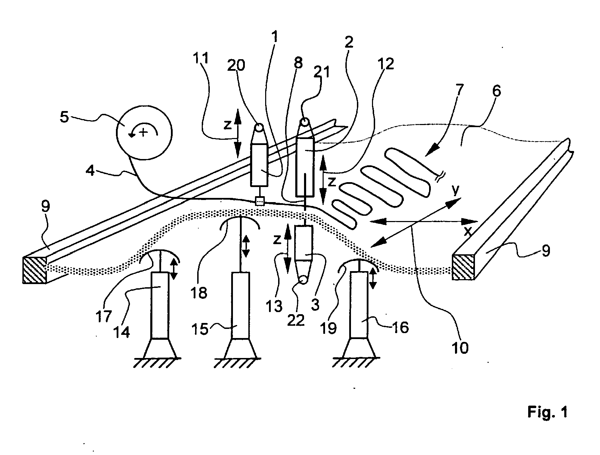

- **Fig. 1**: Eine perspektivische Prinzipdarstellung der erfindungsgemäßen Vorrichtung.

Die Fig. 1 zeigt eine perspektivische Prinzipdarstellung der erfindungsgemäßen Vorrichtung.

Die Vorrichtung umfasst unter anderem ein Führungsmittel 1, einen Nähkopf 2 und eine Unterfadenführung 3. Ein Faserstrang 4 wird von einer Vorratsrolle 5 kontinuierlich abgezogen und durch das Führungsmittel 1 auf einer Tragschicht 6 in einer nahezu beliebigen Bahnkurve zur Bildung eines Faservorformlings 7 abgelegt. Anschließend wird der Faserstrang 4 durch eine am Nähkopf 2 angeordnete Nadel 8 auf der Tragschicht 6 angeheftet. Hierbei werden ein nicht dargestellter Fixieroberfaden und ein Fixierunterfaden verwendet. Der Fixieroberfaden und der Fixierunterfaden bilden unterhalb der Tragschicht 6 eine Vielzahl von Schlaufen, mittels derer der Faserstrang 4 auf der Tragschicht 6 angeheftet wird. Der Fixieroberfaden wird im Bereich des Nähkopfes 2 durch die Nadel 8 geführt, während der Fixierunterfaden unterhalb der Tragschicht 6 durch die Unterfadenführung 3 geleitet wird. Damit die Nadel 8 die Tragschicht 6 zusammen mit dem Fixieroberfaden zur Anbindung und Verkettung mit dem Fixierunterfaden penetrieren kann, ist diese beispielsweise als ein stoffartiges Gewebe mit einer relativ geringen Materialstärke ausgebildet.

Die Tragschicht 6 ist in einem Spannrahmen 9 aufgenommen. Der Spannrahmen 9 ist mittels nicht dargestellter Aktuatoren ausschließlich in der xy-Richtung des Raums, wie durch das Koordinatensystem 10 angedeutet, in Relation zum Führungsmittel 1, zum Nähkopf 2 sowie zur Unterfadenführung 3 positionierbar. Das Führungsmittel 1 sowie der Nähkopf 2 sind im gezeigten Ausführungsbeispiel der Fig. 1 lediglich in der z-Richtung des Raums, wie durch die Pfeile 11,12 angedeutet, durch gleichfalls nicht dargestellte Aktuatoren positionierbar. Die Unterfadenführung 3 ist ebenfalls in Richtung eines Pfeils 13 in z-Richtung des Raums positionierbar.

Die Bewegung des Nähkopfes 2 und der Unterfadenführung 3 erfolgt bevorzugt parallel. Infolge der Trennung der Beweglichkeiten ergibt sich ein konstruktiv einfacherer Aufbau der Vorrichtung. Insbesondere können vorbekannte Vorrichtungen durch Hinzufügung einer Positioniermöglichkeit des Nähkopfes 2, des Führungsmittels 1 sowie der Unterfadenführung 3 in der z-Richtung nach Maßgabe der erfindungsgemäßen Vorrichtung modifiziert werden, da diese Vorrichtungen in der Regel schon herstellerseitig über eine Positionierbarkeit des Spannrahmens 9 in der xy-Richtung verfügen. Es ist darüber hinaus nur noch erforderlich, mehrere Druckstempel zur Modifikation der Oberflächengeometrie der Tragschicht 6 vorzusehen.

Um einen Faservorformling 7 mit einer von einer ebenen Gestalt abweichenden Oberflächengeometrie ablegen zu können, ist die Oberflächengeometrie der Tragschicht 6 durch drei Druckstempel 14,15,16 variierbar. Hierzu sind die Druckstempel 14,15,16 durch nicht näher dargestellte Aktuatoren in Richtung der kleinen schwarzen Doppelpfeile, parallel zur z-Richtung, positionierbar ausgebildet. Die Druckstempel 14,15,16 sind, wie angedeutet fest mit dem Untergrund verbunden. Weiterhin weisen die Druckstempel 14,15,16 Auflagemittel 17,18,19 auf, die das Hinübergleiten der Tragschicht 6 über die feststehenden Druckstempel 14,15,16 erleichtern. Die Auflagemittel 17,18,19 können beispielsweise als pilzförmig ausgebildete Tragplatten gebildet werden. Die Tragplatten können zusätzlich mit einem gleitfähigen Material beschichtet sein oder aus einem derartigen Material bestehen, um die Bewegung der Tragschicht 6 in der xy-Richtung zu erleichtern. Um das Hinübergleiten der Tragschicht 6 weiter zu verbessern, können die Auflagemittel 17,18,19 auch als Rollenauflage oder dergleichen ausgebildet sein. Durch das Positionieren der Druckstempel 14,15,16 in Richtung der kleinen schwarzen Doppelpfeile kann der Tragschicht 6 eine von der ebenen Gestalt abweichende, nahezu beliebige Oberflächengeometrie gegeben werden. Die Druckstempel 14,15,16 können erforderlichenfalls zusätzlich zur Bewegungsmöglichkeit in der z-Richtung um im unteren Auflagerbereich angeordnete Achsen mittels Aktuatoren verschwenkbar ausgebildet sein, um die Anzahl der Positioniermöglichkeiten und damit die Variationsbreite der Änderung der Oberflächengeometrie der Tragschicht 6 zu steigern.

Unterhalb der Tragschicht 6 befinden sich, von dieser verdeckt, weitere nicht dargestellte Druckstempel, die in Entsprechung zu den Druckstempeln 14,15,16 ausgebildet sind. Bevorzugt sind die Druckstempel 14,15,16 in einer matrixartigen Anordnung, vorzugsweise gleichmäßig zueinander beabstandet, unterhalb eines Bereiches der Tragschicht 6 auf dem der Faservorformlings 7 abgelegt werden soll, angeordnet.

Die Deformation der Tragschicht 6 zur Erzeugung einer beliebigen Oberflächengeometrie setzt eine gewisse Elastizität der Tragschicht 6 voraus. Sollte die Elastizität des für die Tragschicht 6 eingesetzten Materials für die Erreichung einer vorgegebenen Oberflächengeometrie nicht ausreichend sein, kann es erforderlich sein, zusätzlich die Geometrie des Spannrahmens 9 mittels nicht näher dargestellter Aktuatoren geringfügig zu modifizieren.

Darüber hinaus sind im gezeigten Ausführungsbeispiel der Vorrichtung das Führungsmittel 1, der Nähkopf 2 sowie die Unterfadenführung 3 um Achsen 20,21,22 verschwenkbar ausgebildet, so dass sich die für die Positionierung zur Verfügung stehenden Freiheitsgrade erhöhen. Ferner ist es möglich, das Führungsmittel 1, den Nähkopf 2 sowie die Unterfadenführung 3 um jeweils eine weitere Achse, die im Wesentlichen senkrecht zu den Achsen 20,21,22 angeordnet ist, verschwenkbar auszubilden, so dass sich die Zahl der Freiheitsgrade weiter steigert. Gegebenenfalls ist die Vorratsrolle 5 so ausgebildet, dass sich diese parallel zum Führungsmittel 1, dem Nähkopf 2 sowie der Unterfadenführung 3 mittels nicht dargestellter Aktuatoren verfahren lässt. Die Verschwenkung des Führungsmittels 1, des Nähkopfes 2 sowie der Unterfadenführung 3 um die Achsen 20,21,22 erfolgt durch entsprechende, nicht näher dargestellte Aktuatoren. Die Positionen sämtlicher Aktuatoren werden mittels einer nicht näher dargestellten Steuer- und Regeleinrichtung kontrolliert.

Infolge der umfangreichen Positionierungsmöglichkeiten des Führungsmittels 1, des Nähkopfes 2 sowie der Unterfadenführung 3 in Verbindung mit den Druckstempeln 14,15,16 sowie dem Spannrahmen 9 können mittels der erfindungsgemäßen Vorrichtung Faservorformlinge 7 mit einer nahezu beliebigen Oberflächengeometrie gebildet werden. So lässt sich, wie im Ausführungsbeispiel der Fig. 1 illustriert, zum Beispiel der Faservorformling 7 mit einer im Wesentlichen wellenförmigen Oberflächengeometrie ablegen bzw. aufbauen.

Hierbei steuert die Steuer- und Regeleinrichtung die jeweiligen Aktuatoren für das Führungsmittel 1 und den Nähkopf 2 so an, dass sich das Führungsmittel 1 mit dem Faserstrang 4, der Nähkopf 2 sowie die Unterfadenführung 3 in einer optimalen Entfernung zur Tragschicht 6 befinden - jeweils angepasst an die lokale Oberflächenkrümmung bzw. Oberflächengeometrie des Faservorformlings 7 - und zugleich eine insbesondere kraftflussorientierte Ablage des Faserstrangs 4 entlang einer vorgegebenen Bahnkurve erfolgt. Mittels der erfindungsgemäßen Vorrichtung lassen sich zudem mehrere Lagen von Fasersträngen 4 übereinander zur Bildung von Faservorformlingen mit höherer Materialstärke ablegen. Die erreichbare Anzahl von übereinander angeordneten Lagen ist hierbei im Wesentlichen von der Länge der Nadel 8 abhängig.

Der Faserstrang 4 ist mit einer Vielzahl von im Wesentlichen parallel zueinander angeordneten Verstärkungsfasern gebildet. Als Verstärkungsfasern kommen beispielsweise Kohlefasern, Glasfasern, Aramidfasern oder dergleichen zum Einsatz. Zur Herstellung eines fertigen Verbundbauteils aus dem Faservorformling 7 wird dieser aus der erfindungsgemäßen Vorrichtung entnommen und beispielsweise nach Maßgabe des bekannten RTM-Verfahrens in einer verschließbaren und vorzugsweise beheizbaren Form mit einem aushärtbaren Kunststoffmaterial imprägniert und anschließend ausgehärtet. Als aushärtbares Kunststoffmaterial bzw. durch Vernetzung aushärtbares Harzsystem findet vorzugsweise ein Epoxydharz, ein Polyesterharz, ein BMI-Harz oder dergleichen Verwendung.

Durch eine geeignete Ansteuerung der Aktuatoren des Führungsmittels 1, der Aktuatoren des Nähkopfes 2, der Aktuatoren der Unterfadenführung 3, der Aktuatoren der Druckstempel 14,15,16 zur Variation der Oberflächengeometrie der Tragschicht 6 sowie der Aktuatoren zur Positionierung des Spannrahmens 9 in der xy-Richtung mittels der Steuer- und Regeleinrichtung, lassen sich darüber hinaus auch in zwei Raumdimensionen gekrümmte Faservorformlinge, das heißt zum Beispiel sphärisch gekrümmte Faservorformlinge mit einer kalottenförmigen Oberflächengeometrie oder dergleichen, herstellen. Derartige Faservorformlinge können, nach der Imprägnierung mit einem aushärtbaren Kunststoffmaterial und einem anschließenden Aushärtungsprozess, unter anderem zur Herstellung von einstückig ausgebildeten Druckschotten für Druckkabinen von Rumpfzellen von Luftfahrzeugen oder dergleichen eingesetzt werden.

Die Aktuatoren können mechanisch, elektrisch, pneumatisch, hydraulisch oder auf andere Art und Weise oder in Kombination der genannten physikalischen Wirkmechanismen betätigbar sein. In besonders vorteilhafter Weise werden die Aktuatoren mit elektrisch betriebenen Spindelantrieben oder dergleichen realisiert, die eine leichte Ansteuerung mittels der Steuer- und Regeleinrichtung bei einer zugleich sehr hohen Positioniergenauigkeit erlauben und darüber hinaus, im Gegensatz zu Pneumatikzylindern oder dergleichen, auch Zwischenpositionen einnehmen können. Ferner weisen elektrisch betriebene Spindelantriebe bei einem konstruktiv relativ einfachen Aufbau eine hohe Einstellgeschwindigkeit bei einer hinreichend hohen Wiederholgenauigkeit auf.

In einer nicht dargestellten Ausführungsvariante der erfindungsgemäßen Vorrichtung kann die Tragschicht 6 mit einem elastischen und flexiblen Material, insbesondere mit einem Elastomer oder dergleichen, gebildet sein. Beispielsweise kann die Tragschicht 6 als Gummimatte bzw. als Gummiplatte mit einer relativ geringen Materialstärke ausgebildet werden. Die Gummiplatte wird bevorzugt vom Spannrahmen 9 aufgenommen. Bei einer hinreichend großen Eigenstabilität der Gummiplatte kann gegebenenfalls auf den Spannrahmen 9 verzichtet werden.

Diese Ausführungsvariante hat den großen Vorteil, dass auf den Fixierunterfaden und damit auch auf die Unterfadenführung 3 beim Heften des Faserstrangs 4 verzichtet werden kann. Der abgelegte Faserstrang 4 wird vorzugsweise im "Tufting"-Verfahren allein mittels des Fixieroberfadens auf der Gummiplatte fixiert. Hierbei durchstößt die Nadel 8 die Gummiplatte nicht vollständig, sondern dringt nur oberflächlich in diese ein. Infolge der definierten Elastizität der Gummiplatte verklemmt sich der Fixieroberfaden jedoch beim Zurückziehen der Nadel 8 innerhalb der Gummiplatte, wodurch sich im Bereich der Einstichstelle eine mechanisch hinreichend fixierte Schlaufe des Fixieroberfadens bildet. Infolge dieser im Bereich der Oberseite der Gummiplatte gebildeten Schlaufen des Fixieroberfadens wird eine ausreichende Anheftung des Faserstrangs 4 auf der Gummiplatte erreicht. Der fertige Faservorformling 7 kann, da die Anheftung allein durch die Schlaufenbildung des Fixieroberfadens in der Gummiplatte bewirkt wird, relativ leicht und ohne Beschädigungen von der Gummiplatte abgehoben werden. Es verbleibt also keine gewebeartige, textile Tragschicht 6 unterhalb des Faservorformlings 7 nach dessen Fertigstellung. Anstelle einer Gummiplatte kann beispielsweise auch eine elastische Schaumkunststoffplatte oder dergleichen verwendet werden.

Bei der Durchführung des "Tufting"- Verfahrens auf der erfindungsgemäßen Vorrichtung kann demnach vollständig auf eine zur Penetration mit der Nadel gewebeartig, textil ausgebildete Tragschicht zur Ablage und zum Anheften des Faserstrangs 4 verzichtet werden, die insbesondere in mehrschichtigen Faservorformlingen 7. einen bevorzugten Delaminationsbereich darstellen kann. Darüber hinaus sind beim Anheften der Faserstränge mittels des "Tufting"- Verfahrens der Fixierunterfaden sowie die Unterfadenführung 3 entbehrlich, so dass sich der konstruktive Aufwand für die erfindungsgemäße Vorrichtung erheblich verringert.

Die Erfindung betrifft demnach eine Vorrichtung zur Herstellung eines Faservorformlings 7 mit einer nahezu beliebigen Oberflächengeometrie im TFP-Verfahren, wobei ein Faserstrang 4 mit einem Führungsmittel 1 in einer nahezu beliebigen Bahnkurve auf einer Tragschicht 6 ablegbar ist und der Faserstrang 4 mit mindestens einem Fixierfaden mittels eines Nähkopfes 2 auf der Tragschicht 6 anheftbar ist, wobei die Tragschicht 6 in einer xy-Richtung in Relation zum Führungsmittel 1 und zum Nähkopf 2 positionierbar ist, wobei der Nähkopf 2 und das Führungsmittel 1 in einer z-Richtung positionierbar sind.

Die Oberflächengeometrie der Tragschicht 6 ist zur Herstellung eines Faservorformlings 7 vorzugsweise mit einer nahezu beliebigen Oberflächengeometrie durch Druckstempel 14, 15, 16 variierbar.

Die Tragschicht 6 ist insbesondere in einem Spannrahmen 9 aufgenommen.

Die Tragschicht 6 ist vorteilhaft mit einem Flächengewirk, insbesondere mit einem Gewebe oder dergleichen, zur Anheftung des Faserstrangs 4 im konventionellen Heftverfahren mit einem Fixieroberfaden und einem Fixierunterfaden gebildet.

Im Bereich des Nähkopfes 2 unterhalb der Tragschicht 6 ist beispielsweise eine Unterfadenführung 3 zur Führung des Fixierunterfadens angeordnet.

Der Nähkopf 2 und/oder die Unterfadenführung 3 sind vorzugsweise jeweils um mindestens eine Achse 21, 22 verschwenkbar.

Die Positionierung des Nähkopfes 2, der Unterfadenführung 3 sowie des Führungsmittels 1 erfolgt insbesondere durch Aktuatoren.

Der Spannrahmen 9 und die Druckstempel 14, 15, 16 sind vorteilhaft durchAktuatoren positionierbar.

Die Aktuatoren sind vorzugsweise von einer Steuer- und Regeleinrichtung kontrollierbar.

Die Tragschicht 6 ist beispielsweise mit einem elastischen und flexiblen Flächengebilde, insbesondere mit einer Gummiplatte, zum Anheften der Faserstränge imTufting-Verfahren, gebildet.

Der Nähkopf 2 und/oder das Führungsmittel 1 sind vorzugsweise durch Aktuatoren positionierbar.

Der Spannrahmen 9 und die Druckstempel 14, 15, 16 sind vorteilhaft durchAktuatoren positionierbar.

Die Aktuatoren sind vorzugsweise mittels einer Steuer- und Regeleinrichtung steuerbar.

### Bezugszeichenliste

- 1: Führungsmittel
- 2: Nähkopf
- 3: Unterfadenführung
- 4: Faserstrang
- 5: Vorratsrolle
- 6: Tragschicht
- 7: Faservorformling
- 8: Nadel
- 9: Spannrahmen
- 10: Koordinatensystem
- 11: Pfeil
- 12: Pfeil
- 13: Pfeil
- 14: Druckstempel
- 15: Druckstempel
- 16: Druckstempel
- 17: Auflagemittel
- 18: Auflagemittel
- 19: Auflagemittel
- 20: Achse
- 21: Achse
- 22: Achse

## Patentansprüche

1. Vorrichtung zur Herstellung eines Faservorformlings (7) mit einer nahezu beliebigen Oberflächengeometrie im TFP-Verfahren, mit den folgenden Merkmalen:
a) ein Faserstrang (4) ist mit einem Führungsmittel (1) in einer nahezu beliebigen Bahnkurve auf einer elastischen und flexiblen Tragschicht (6) ablegbar,
b) der Faserstrang (4) ist mit mindestens einem Fixierfaden mittels eines Nähkopfes (2) auf der Tragschicht (6) anheftbar,
c) die Tragschicht (6) ist in einer xy-Richtung in Relation zum Führungsmittel (1) und zum Nähkopf (2) positionierbar,
d) der Nähkopf (2) und das Führungsmittel (1) sind in einer z-Richtung positionierbar,
e) eine Oberflächengeometrie der Tragschicht (6) ist zur Herstellung eines Faservorformlings (7) mit einer nahezu beliebigen Oberflächengeometrie durch eine Vielzahl von unterhalb der Tragschicht (6) matrixartig angeordneten Druckstempeln (14,15,16) mit Auflagemitteln (17,18,19) variierbar.

2. Vorrichtung nach Anspruch 1, **dadurch gekennzeichnet, dass** die Tragschicht (6) in einem Spannrahmen (9) aufgenommen ist.

3. Vorrichtung nach Anspruch 1 oder 2, **dadurch gekennzeichnet, dass** die Tragschicht (6) mit einem Gewebe zur Anheftung des Faserstrangs (4) im konventionellen Heftverfahren mit einem Fixieroberfaden und einem Fixierunterfaden gebildet ist.

4. Vorrichtung nach einem Ansprüche 1 bis 3, **dadurch gekennzeichnet, dass** im Bereich des Nähkopfes (2) unterhalb der Tragschicht (6) eine Unterfadenführung (3) zur Führung des Fixierunterfadens angeordnet ist.

5. Vorrichtung nach Anspruch 4, **dadurch gekennzeichnet, dass** der Nähkopf (2) und/oder die Unterfadenführung (3) jeweils um mindestens eine Achse (21,22) verschwenkbar sind.

6. Vorrichtung nach Anspruch 4 oder 5, **dadurch gekennzeichnet, dass** die Positionierung des Nähkopfes (2), der Unterfadenführung (3) sowie des Führungsmittels (1) durch Aktuatoren erfolgt.

7. Vorrichtung nach einem der Ansprüche 4 bis 6, **dadurch gekennzeichnet, dass** der Spannrahmen (9) und die Druckstempel (14,15,16) durch Aktuatoren positionierbar sind.

8. Vorrichtung nach einem der Ansprüche 4 bis 7, **dadurch gekennzeichnet, dass** die Aktuatoren von einer Steuer- und Regeleinrichtung kontrollierbar sind.

9. Vorrichtung nach Anspruch 1 oder 2, **dadurch gekennzeichnet, dass** die Tragschicht (6) mit einem elastischen und flexiblen Flächengebilde; insbesondere mit einer Gummiplatte, zum Anheften der Faserstränge im Tufting-Verfahren, gebildet ist.

10. Vorrichtung nach Anspruch 9, **dadurch gekennzeichnet, dass** der Nähkopf (2) und/oder das Führungsmittel (1) durch Aktuatoren positionierbar sind.

11. Vorrichtung nach Anspruch 9 oder 10, **dadurch gekennzeichnet, dass** der Spannrahmen (9) und die Druckstempel (14,15,16) durch Aktuatoren positionierbar sind.

12. Vorrichtung nach einem der Ansprüche 9 bis 11, **dadurch gekennzeichnet, dass** die Aktuatoren mittels einer Steuer- und Regeleinrichtung steuerbar sind.

## Claims

1. Device for producing a fibre preform (7) with virtually any desired surface geometry by the TFP process, with the following features:
a) a fibre strand (4) can be laid by guiding means (1) in virtually any desired path curve on an elastic and flexible backing layer (6),
b) the fibre strand (4) can be attached on the backing layer (6) by at least one fixing thread by means of a sewing head (2),
c) the backing layer (6) can be positioned in an xy direction in relation to the guiding means (1) and the sewing head (2),
d) the sewing head (2) and the guiding means (1) can be positioned in a z direction,
e) for the production of a fibre preform (7) with virtually any desired surface geometry, the surface geometry of the backing layer (6) can be varied by a multiplicity of rams (14, 15, 16) arranged in a matrix-like manner underneath the backing layer (6) and having resting means (17, 18, 19).

2. Device according to Claim 1, **characterized in that** the backing layer (6) is accommodated in a clamping frame (9).

3. Device according to Claim 1 or 2, **characterized in that** the backing layer (6) is formed by a woven fabric, for the attachment of the fibre strand (4) by the conventional method of attachment with an upper fixing thread and a lower fixing thread.

4. Device according to one of Claims 1 to 3,
**characterized in that**, in the region of the sewing head (2) underneath the backing layer (6), there is arranged a lower thread guide (3) for guiding the lower fixing thread.

5. Device according to Claim 4, **characterized in that** the sewing head (2) and/or the lower thread guide (3) can be respectively pivoted about at least one axis (21, 22).

6. Device according to Claim 4 or 5, **characterized in that** the positioning of the sewing head (2), the lower thread guide (3) and the guiding means (1) is performed by actuators.

7. Device according to one of Claims 4 to 6,
**characterized in that** the clamping frame (9) and the rams (14, 15, 16) can be positioned by actuators.

8. Device according to one of Claims 4 to 7,
**characterized in that** the actuators can be controlled by an open-loop and closed-loop control device.

9. Device according to Claim 1 or 2, **characterized in that** the backing layer (6) is formed by an elastic and flexible sheet-like formation, in particular by a rubber sheet, for attaching the fibre strands by the tufting process.

10. Device according to Claim 9, **characterized in that** the sewing head (2) and/or the guiding means (1) can be positioned by actuators.

11. Device according to Claim 9 or 10, **characterized in that** the clamping frame (9) and the rams (14, 15, 16) can be positioned by actuators.

12. Device according to one of Claims 9 to 11,
**characterized in that** the actuators can be controlled by means of an open-loop and closed-loop control device.

## Revendications

1. Dispositif pour la production d'une ébauche fibreuse (7) présentant une géométrie de surface presque quelconque au cours d'un procédé TFP, comprenant les caractéristiques suivantes:
a) un faisceau de fibres (4) peut être déposé dans une trajectoire presque quelconque sur une couche de support (6) élastique et souple par un moyen de guidage (1),
b) ledit faisceau de fibres (4) peut être attaché à ladite couche de support (6) par au moins un fil d'attache au moyen d'une tête à coudre (2),
c) ladite couche de support (6) peut être positionnée dans une direction des xy par rapport audit moyen de guidage (1) et à ladite tête à coudre (2),
d) ladite tête à coudre (2) et ledit moyen de guidage (1) peuvent être positionnés dans une direction des z,
e) une géométrie de surface de ladite couche de support (6) peut être variée pour la production d'une ébauche fibreuse (7) présentant une géométrie de surface presque quelconque, par une pluralité de pistons (14, 15, 16) ayant des moyens d'appui (17, 18, 19) et étant arrangés au dessous de ladite couche de support (6) sous forme de matrice.

2. Dispositif selon la revendication 1, **caractérisé en ce que** ladite couche de support (6) est logée dans un cadre de serrage (9).

3. Dispositif selon l'une des revendications 1 ou 2, **caractérisé en ce que** ladite couche de support (6) est formée par un tissu pour attacher ledit faisceau de fibres (4) au cours du procédé d'attache conventionnel au moyen d'un fil d'attache supérieur et d'un fil d'attache inférieur.

4. Dispositif selon l'une quelconque des revendications 1 à 3, **caractérisé en ce qu'**un guide-fil inférieur (3) pour guider ledit fil d'attache inférieur est arrangé au dessous de ladite couche de support (6) en la région de ladite tête à coudre (2).

5. Dispositif selon la revendication 4, **caractérisé en ce que** ladite tête à coudre (2) et/ou ledit guide-fil inférieur (3) peuvent être respectivement pivotés sur au moins un axe (21, 22).

6. Dispositif selon l'une des revendications 4 ou 5, **caractérisé en ce que** le positionnement de ladite tête à coudre (2), dudit guide-fil inférieur (3) ainsi que dudit moyen de guidage (1) est exécuté par des actionneurs.

7. Dispositif selon l'une quelconque des revendications 4 à 6, **caractérisé en ce que** ledit cadre de serrage (9) et lesdits pistons (14, 15, 16) peuvent être positionnés par des actionneurs.

8. Dispositif selon l'une quelconque des revendications 4 à 7, **caractérisé en ce que** lesdits actionneurs peuvent être contrôlés par un appareil de commande et de réglage.

9. Dispositif selon l'une des revendications 1 ou 2, **caractérisé en ce que** ladite couche de support (6) est formée par une formation planiforme élastique et souple, particulièrement par une plaque en caoutchouc, pour attacher lesdits faisceaux de fibres au cours d'un procédé de tufting.

10. Dispositif selon la revendication 9, **caractérisé en ce que** ladite tête à coudre (2) et/ou ledit moyen de guidage (1) peuvent être positionnés par des actionneurs.

11. Dispositif selon l'une des revendications 9 ou 10, **caractérisé en ce que** ledit cadre de serrage (9) et lesdits pistons (14, 15, 16) peuvent être positionnés par des actionneurs.

12. Dispositif selon l'une quelconque des revendications 9 à 11, **caractérisé en ce que** lesdits actionneurs peuvent être commandés par un appareil de commande et de réglage.
